# EUROPEAN PATENT APPLICATION

(11) **EP 3 130 799 A1**
(43) Date of publication of application: **15.02.2017**
(21) Application number: 14887028.0
(22) Date of filing: 28.03.2014
(51) Int. Cl.: F03D 13/00, F03D 1/06

(54) **WIND TURBINE BLADE AND WIND POWER GENERATOR PROVIDED WITH SAME**

(71) Applicant: The Chugoku Electric Power Co., Inc., Hiroshima-shi, Hiroshima 730-8701 (JP)
(72) Inventor: WADA, Yasutaka, Hiroshima-shi Hiroshima 730-8701 (JP); KUBOTA, Haruhito, Hiroshima-shi Hiroshima 730-8701 (JP); YAMAMURA, Yukimasa, Hiroshima-shi Hiroshima 730-8701 (JP); UCHIYAMA, Ichiro, Hiroshima-shi Hiroshima 730-8701 (JP); OYAMA, Keiji, Hiroshima-shi Hiroshima 730-8701 (JP); YAMASAKI, Toshiki, Hiroshima-shi Hiroshima 730-8701 (JP)
(74) Representative: Osha Liang
(86) International application number: PCT/JP2014/059127
(87) International publication number: WO 2015/145723

(57) **Abstract**

PROBLEM: To reduce power loss of a windmill blade and aerodynamic noise caused by the windmill blade, by weakening blade end vortexes generated at a blade end part of the windmill blade, and causing the blade end vortexes to be generated at positions apart from a blade end of the windmill blade.

SOLUTION: A windmill blade 11 to be employed in a horizontal axis lift-type windmill includes: a blade body 12 having a streamlined cross-sectional shape in which a blade chord length gradually decreases from a blade root 15 toward a blade end 16; and a winglet 25, having a shape including a pointed tip 28, which is integrally provided to the blade end 16 of the blade body 12, the winglet 25 being configured in a shape such that the tip 28 is positioned further rearward in a rotation direction than a trailing edge 19 of the blade end 16 of the blade body 12 and further outward in a blade length direction than the blade body 12. A pressure difference can be reduced between upper and lower surfaces at a blade end part of the windmill blade 11, thereby being able to weaken blade end vortexes generated at the blade end part of the windmill blade 11, and cause the blade end vortexes to be generated at positions apart from the blade end, which enables a reduction in power loss and aerodynamic noise.

## Description

### [Technical Field]

The present invention relates to a windmill blade and a wind power generator provided with the same.

### [Background Art]

Wind power generation utilizes clean natural energy that is domestic energy not dependent on overseas suppliers, and also energy that does not emit global warming gases and does not require carbon credit cost. Currently, large scale high efficiency windmills that have been developed in Europe and the like are being used on a commercial basis.

For example, since outer edges of blades (in particular at the vicinity of end parts thereof) are high Reynolds number regions in horizontal axis lift-type windmills, airfoils such as those typified by the NACA series can be utilized for the blades. In such blades, since negative pressure is generated on the upper surface side (suction surface side) and positive pressure is generated on the lower surface side (pressure surface side), a vortex (blade tip vortex) flowing from the lower surface toward the upper surface is generated at blade tip parts due to the pressure difference between upper and lower surfaces. This vortex induces an airflow, around the blade, in a direction different from the direction of travel (rotation direction), and acts in a direction in which the airflow hitting the blades is decreased, namely, in a direction to reduce the angle of attack of the blades. As a result, the direction of the aerodynamic force acting on the blades is tilted rearwards by an angle corresponding to the reduction in the angle of attack (induced angle of attack). The horizontal component thereof along the direction of travel (the rotation direction) acts as drag. This drag is induced drag (induced resistance), which causes a loss of power in a windmill. Further, noise is also caused by blade tip vortexes.

The induced drag inevitably arises as long as lift is generated acting on the blade, and is caused by the presence of the blade tip. Thus, the induced drag can be reduced by decreasing the effects of the vortex at the blade tip as much as possible, for example, by increasing the blade width with respect to the blade chord length. If the induced drag is reduced, the overall drag is reduced. As a result, the lift-to-drag ratio increases, thereby being able to reduce the required thrust or horsepower. Also, in windmill blades, induced drag is reduced by employing blades with a high aspect ratio and reducing the blade chord length at the blade end parts, so as to reduce the effects of the vortexes generated at the blade ends as much as possible. However, this is still insufficient.

Further, with regards to the noise power level of a windmill in relation to rotor diameter, the noise power level tends to increase as the rotor diameter increases in the case of large scale windmills. In view of this, it is considered that noise is more affected by the circumferential speed at the blade ends in association with increased length, than by the rotation speed.

Noise from windmills has hitherto been classified into blade aerodynamic noise, and mechanical noise such as noise from a nacelle and a tower. However, blade aerodynamic noise dominates in the current large scale windmills in the 1 to 3 MW class built in windfarms. Therefore, in order to reduce the noise of windmills, it is required to reduce the aerodynamic noise generated from the blades. Although the noise caused by blade end vortexes is limited, it is desirable to reduce blade end vortexes since they cause disruption of the flow at the blade end parts, which can cause a loss of power.

Patent Literature 1 describes a windmill blade provided with a winglet that is formed on a blade end part at the suction surface side or the pressure surface side thereof such that the blade is bent at a predetermined angle (15° to 55°). A windmill blade configured in this manner can reduce vortexes generated at the blade end part of the windmill blade, thereby being able to reduce the loss of power caused by blade end vortexes. Further, it is also possible to reduce the generation of noise caused by vortexes that are created at the blade end part of the windmill blade.

### [Citation List]

### [Patent Literature]

Patent Literature 1: JP 2012-180770

### [Summary of Invention]

### [Technical Problem]

However, although the windmill blade described in the Patent Literature 1 can reduce power loss and noise generation as compared to that without a winglet, it is not possible to sufficiently reduce power loss and noise generation, in cases where windmill blades of large scale windmills in the 1 to 3 MW class or above having increased rotor diameters are employed.

In view of such conventional problems as described above, an aspect of the present invention is to provide a windmill blade and a wind power generator provided with the same, the windmill blade being capable of sufficiently reducing power loss and noise generation even in cases where windmill blades of large scale windmills in the 1 to 3 MW class or above having increased rotor diameters are employed.

### [Solution to Problem]

The present invention adopts the following measures to solve the above problems.

Namely, an aspect of the present invention is a windmill blade to be employed in a horizontal axis lift-type windmill, the windmill blade comprising: a blade body having a streamlined cross-sectional shape, the blade body having a blade chord length that gradually decreases from a blade root toward a blade end; and a winglet having a shape including a pointed tip, the winglet being integrally provided to the blade end of the blade body, the winglet being configured in a shape such that the tip is positioned further rearward in a rotation direction than a trailing edge of the blade end of the blade body and further outward in a blade length direction than the blade body.

According to the windmill blade of an embodiment of the present invention, a pressure difference between the upper and lower surfaces at a blade end part of the windmill blade can be reduced, thereby being able to weaken blade end vortexes generated at the blade end part, and reduce noise generation caused by the blade end vortexes.

Further, with the tip of the winglet being positioned further rearward in a rotation direction than the trailing edge of the blade end of the blade body and further outward in the blade length direction than the blade body, the locations where the blade end vortexes are generated can be positioned apart further outward than the trailing edge of the blade end of the blade body and further rearward, and the effects of the blade end vortexes on the windmill blade can be reduced, thereby being able to reduce the induced drag and the power loss.

Further, in an embodiment of the present invention, the winglet may be integrally provided to the blade end of the blade body such that upper and lower surfaces of the winglet are turned up at a predetermined angle with respect to upper and lower surfaces of the blade body.

According to the windmill blade of an embodiment of the present invention, the locations where the blade end vortexes are generated at the blade end part of the windmill blade can be positioned apart above the upper surface of the blade end of the blade body, and positioned apart further rearward than the trailing edge of the blade end of the blade body, and further outward than the blade end of the blade body. This can reduce the power loss of the windmill blade and a moment arising at the blade root of the windmill blade which is caused by induced drag.

Further, in an embodiment of the present invention, the turned up angle of the winglet may be from 30° to 90°.

According to the windmill blade of an embodiment of the present invention, with the turned up angle of the winglet being appropriately set in a range of from 30° to 90°, the power loss and the generation of aerodynamic noise can reliably be reduced even in cases where various windmill blades of different cross-sectional shapes are employed.

Further, in an embodiment of the present invention, the winglet may be formed in a substantially sickle shape in plan view including a pointed tip.

According to the windmill blade of an embodiment of the present invention, with the winglet having a substantially sickle shape in plan view including a pointed tip, the blade end vortexes generated at the blade end part of the windmill blade can be weakened, and the power loss and the generation of aerodynamic noise can be reduced.

Further, in an embodiment of the present invention, the winglet may be formed in a substantially triangular shape in plan view including a pointed tip.

According to the windmill blade of an embodiment of the present invention, with the winglet having a substantially triangular shape in plan view including a pointed tip, the blade end vortexes generated at the blade end part of the windmill blade can be weakened, and the power loss and the generation of aerodynamic noise can be reduced. The winglet can also be manufactured simply.

Further, in an embodiment of the present invention, a base end of the winglet may have a streamlined cross-sectional shape of the same size and shape as size and shape of the blade end of the blade body, and the base end of the winglet may be integrally attached to the blade end of the blade body.

According to the windmill blade of an embodiment of the present invention, a smooth coupling part between the winglet and the blade body can be achieved, which can restrain turbulence from occurring at the coupling part between the two parts.

Further, an embodiment of the present invention also comprises a windmill comprising the windmill blade of any one of claims 1 to 6, the windmill blade comprising a plurality of windmill blades; and a generator configured to convert rotational energy of the windmill into electrical energy.

### [Advantageous Effects of Invention]

As described above, according to the windmill blade and the wind power generator provided therewith of the present invention, a pressure difference between the upper and lower surfaces at the blade end part of the windmill blade can be reduced, and thus blade end vortexes generated at the blade end part can be weakened, thereby being able to reduce power loss.

Additionally, the locations where the blade end vortexes are generated can be positioned apart further rearward in the rotation direction than the blade end of the windmill blade, further outward in the blade length direction than the windmill blade, and further above, thereby being able to reduce the generation of aerodynamic noise caused by blade end vortexes.

### [Brief Description of Drawings]

Fig. 1 is a front elevation illustrating a wind power generator according to an embodiment of the present invention.
Fig. 2 is a side elevation of Fig. 1.
Fig. 3 is a plan view illustrating a windmill blade according to an embodiment of the present invention, and is a plan view of a part thereof to the right side in the drawing of line A-A of Fig. 1, as viewed from the nearside of Fig. 1.
Fig. 4 is a front view of Fig. 3, viewing the part thereof to the right side in the drawing of line A-A of Fig. 1, as viewed in the direction B of Fig. 1.
Fig. 5 a plan view of a winglet, and is a plan view of a winglet at the tip of the part on the right side of line A-A of Fig. 1, as viewed from the nearside of Fig. 1.
Fig. 6 is a cross-section as viewed along line A-A of Fig. 1.
Fig. 7 is a plan view illustrating a windmill blade according to another embodiment of the present invention.

### [Description of Embodiments]

Embodiments of the present invention will hereinafter be described, with reference to the drawings.

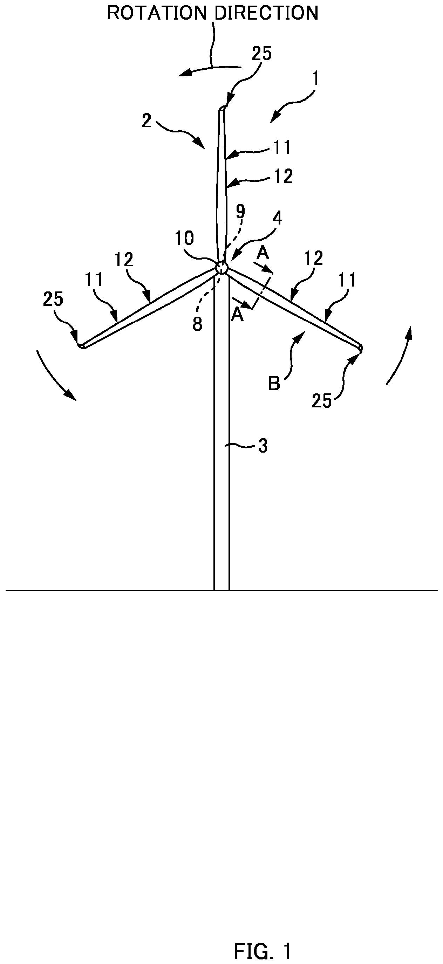

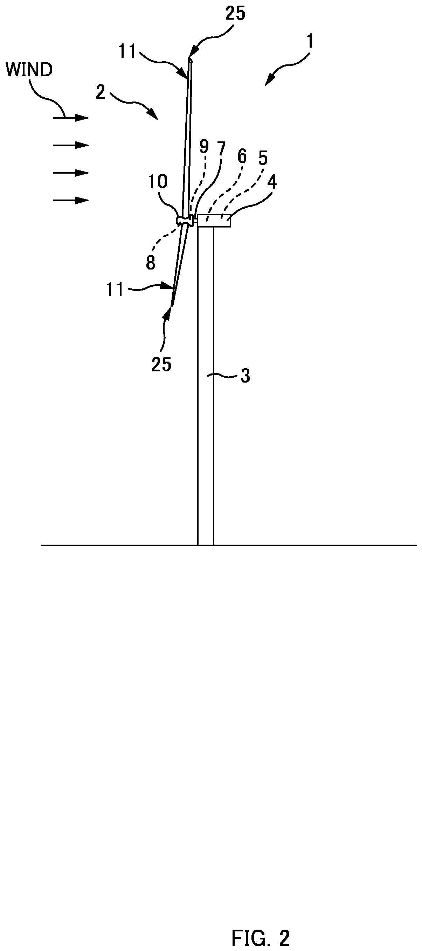

Figs. 1 to 6 illustrate a wind power generator according to an embodiment of the present invention. As illustrated in Figs. 1 and 2, the wind power generator 1 according to this embodiment comprises a horizontal axis lift-type windmill 2, a generator 5 configured to convert rotational energy of the windmill 2 into electrical energy, and ancillary equipment 6 of the generator 5.

As illustrated in Figs. 1 and 2, the windmill 2 comprises a tower 3 standing upright on the ground or the like, a nacelle 4 disposed at the top of the tower 3 so as to be pointed in a substantially horizontal direction, and plural windmill blades 11 attached to the leading end of the nacelle 4 so as to be rotatable.

The nacelle 4 is formed in a box shape having an interior space, and the generator 5 and the ancillary equipment 6 thereof are housed inside the space of the nacelle 4. A rotary shaft 7 on the generator 5 side protrudes by a predetermined length out from the leading end of the nacelle 4, and the rotor hub 8 is attached to this protruding part of the rotary shaft 7.

The rotor hub 8 is, for example, formed in a cylindrical shape, and is integrally attached to the leading end of the rotary shaft 7 by means of fitting or the like. Plural support shafts 9 are integrally attached to the circumferential surface of the rotor hub 8 in such a manner as to radiate from the rotary shaft 7, and the windmill blades 11 are respectively attached to the support shafts 9. The rotor hub 8 and the support shafts 9 are configured to be enclosed with a cover 10 having a leading end of a spherically shape, such that only the windmill blades 11 radially protrude outwards from the cover 10.

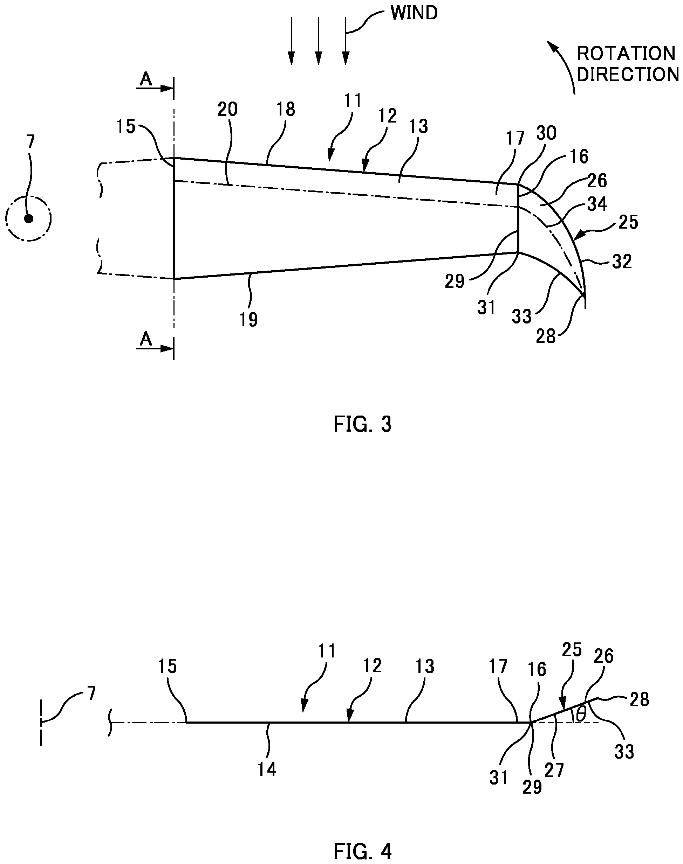

The windmill blades 11 are made of a fiber reinforced plastic, such as a glass fiber reinforced plastic or a carbon fiber reinforced plastic. As illustrated in Figs. 3 to 6, the windmill blades 11 each are configured with a blade body 12 in a hollow plate shape having one end 15 in the length direction that is attached to the support shaft 9 on the rotor hub 8 side, and a winglet 25 integrally provided to the other end 16 in the blade length direction of the blade body 12.

It should be noted that the attachment section of the blade body 12 to be attached to the rotor hub 8 is omitted from illustration in Figs. 3 to 6.

Hereinafter, the one end 15 of the blade body 12 will be referred to as the blade root 15, and the other end 16 will be referred to as the blade end 16.

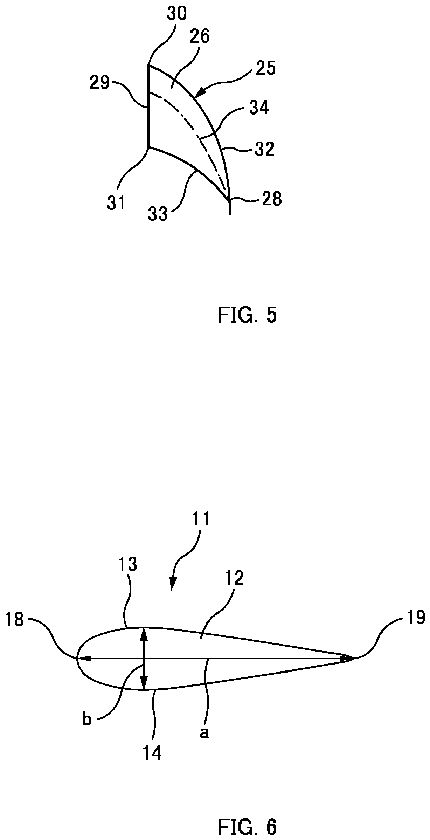

The blade body 12 is, as illustrated in Fig. 6, in a streamlined cross-sectional shape, and is, as illustrated in Fig. 3, configured such that a blade chord length a gradually decreases from the blade root 15 toward the blade end 16 in the blade length direction, and the blade thickness b gradually decreases from the blade root 15 toward the blade end 16 in the blade length direction, while the blade end 16 of the blade body 12 having the minimum blade chord length a and blade thickness b is integrally provided with the winglet 25.

It should be noted here that the streamlined cross-sectional shape means, as illustrated in Fig. 6, a cross-sectional shape in which a leading edge 18 in the rotation direction is round and a trailing edge 19 in the rotation direction is pointed.

Further, the blade chord length a means the length of a straight line connecting the leading edge 18 and the trailing edge 19 of the blade body 12 (also referred to as a blade chord line). The blade thickness b means a distance between an upper surface 13 and a lower surface 14 of the blade body 12 in a direction orthogonal to the blade chord length a.

The winglet 25 is, as illustrated in Fig. 3, integrally attached to the blade end 16 of the blade body 12 using a joining means such as adhesive, in such a manner as to achieve linking of a reference line 20 of the blade body 12 (a line connecting positions corresponding to 1/4 of the blade chord length a) and a reference line 34 (a line connecting positions corresponding to 1/4 of the blade chord length a). Further, the reference line 34 changes its direction into the rotation direction, in such a manner as to trace out a curve of a substantially sickle shape in plan view.

The winglet 25 is, as illustrated in Figs. 3 and 5, formed in a substantially sickle shape in plan view, for example, in which a tip 28 is formed in a pointed shape; a base end 29 is formed in a linear form; and a front line 32 and a rear line 33, which connect the tip 28 and leading and trailing edges 30, 31 of the base end 29, respectively, are formed in curved lines having respective predetermined curvatures. The linear part of the base end 29 is integrally attached to the blade end 16 of the blade body 12.

The winglet 25 is formed such that the cross-sectional shape of the base end 29 is a streamlined cross-sectional shape having the same size as that of the blade end 16 of the blade body 12. Then, the winglet 25 is integrally attached to the blade end 16 of the blade body 12 such that, when the base end 29 has been attached to the blade end 16 of the blade body 12, the leading edge 30 and the trailing edge 31 of the base end 29 of the winglet 25 are continuous with the leading edge 18 and the trailing edge 19 of the blade end 16 of the blade body 12, and an upper surface 26 and a lower surface 27 of the base end 29 of the winglet 25 are continuous with the upper surface 13 and the lower surface 14 of the blade body 12.

In the winglet 25, as illustrated in Fig. 3, the lengths of the front line 32 and the rear line 33 connecting the tip 28 and the leading and trailing edges 30, 31 of the base end 29, respectively, the angle formed by the front line 32 and the rear line 33, and the like, are set, such that the tip 28 is positioned further rearward than the trailing edge 19 of the blade end 16 of the blade body 12, and the tip 28 is positioned further outward (outward in the length direction of the blade body 12) than the blade end 16 of the blade body 12.

Further, in the winglet 25, as illustrated in Fig. 4, an attachment angle (hereinafter, referred to as a turned up angle) θ for attachment to the blade end 16 of the blade body 12 is set such that the upper and lower surfaces 26, 27 are turned up at a predetermined angle with respect to the upper and lower surfaces 13, 14 of the blade body 12.

It should be noted that, in this embodiment of the present invention, the winglet 25 is attached to the blade end 16 of the blade body 12 such that the turned up angle θ is 30°. However, it is not limited thereto, and the turned up angle θ described above may be appropriately set within a range of from 30° to 90°.

It should be noted that, in this embodiment of the present invention, although the winglet 25 is integrally attached to the blade end 16 of the blade body 12 using a joining means such as adhesive, the winglet 25 may be integrally formed with the blade body 12.

Further, in this embodiment of the present invention, the winglet 25 is formed in a substantially sickle shape in plan view, however, in order to simplify manufacturing, the winglet 25 may be formed in a substantially triangular shape in plan view.

In the wind power generator 1 according to this embodiment configured as described above, the winglet 25 having a substantially sickle shape including a pointed tip is provided to the blade end 16 of the blade body 12 of each of the windmill blades 11, such that the winglet 25 forms a blade end of each of the windmill blades 11. Accordingly, a large pressure difference between the upper and lower surfaces 13, 14 at the blade end 16 of the blade body 12 in each of the windmill blades 11 can be converted into a small pressure difference by the tapered winglet 25. Namely, the winglet 25 is formed in a shape having a cross-sectional area that decreases toward the tip, and hence the pressure difference between the upper and lower surfaces 26, 27 of the winglet 25 decreases toward the tip of the winglet 25. Thus, the pressure difference therebetween at the blade end part of each of the windmill blades 11 can be reduced, as compared to those without the winglets 25.

Therefore, blade end vortexes generated at the blade end parts of the windmill blades 11 can be weakened, even in cases where such windmill blades 11 are applied which are long and thin with a high aspect ratio of the large scale windmill 2 in the 1 to 3 MW class. Thus, the induced drag generated at the blade end parts of the windmill blades 11 can be reduced, thereby being able to reduce the overall power loss of the windmill 2, leading to the enhancement of the output of the windmill 2.

Further, the tip 28 of the winglet 25 is formed in a pointed shape, and positioned further rearward than the trailing edge 19 of the blade end 16 of the blade body 12 and further outward in the blade length direction than the blade end 16 of the blade body 12. Thus, the large pressure difference between the upper and lower surfaces 13, 14 at the blade end 16 of the blade body 12 of each of the windmill blades 11 can be converted into a small pressure difference with the tapered winglet 25. Accordingly, blade end vortexes generated at the blade end parts of the windmill blades 11 (parts corresponding to the winglets 25) can be weakened, and the locations where such weakened blade end vortexes are generated can be positioned apart at the tip 28 of the winglet 25, that is, further rearward than the trailing edge 19 of the blade end 16 of the blade body 12 and further outward in the blade length direction than the blade body 12.

Therefore, the effects of blade end vortexes at the blade end parts of the windmill blades 11 can be reduced, even in cases where such windmill blades 11 are applied which are long and thin with a high aspect ratio of large scale windmills in the 1 to 3 MW class. Hence, as compared to the case without the winglet 25, noise caused by the blade end vortexes can largely be reduced, thereby being able to greatly reduce the overall aerodynamic noise of the windmill 2.

Further, since the upper and lower surfaces 26, 27 of the winglet 25 are turned up by about 30° with respect to the upper and lower surfaces 13, 14 of the blade body 12, the locations where the blade end vortexes are generated at the blade end parts of the windmill blades 11 can be positioned apart further upward than the upper surface 13 of the blade end 16 of the blade body 12, further rearward than the trailing edge 19 of the blade end 16 of the blade body 12, and further outward in the blade length direction than the blade end 16 of the blade body 12.

Thus, the power loss, which is obtained by multiplying the blade length by the induced resistance generated at the blade end parts of the windmill blades 11, and the moment arising at the blade root of the windmill blades 11 can be reduced as compared to a configuration in which the upper and lower surfaces 26, 27 of the winglet 25 are formed in the same plane as the upper and lower surfaces 13, 14 of the blade body 12. As a result, it becomes possible to enhance the overall efficiency of the windmill 2 without reinforcing the structure of the windmill blades 11.

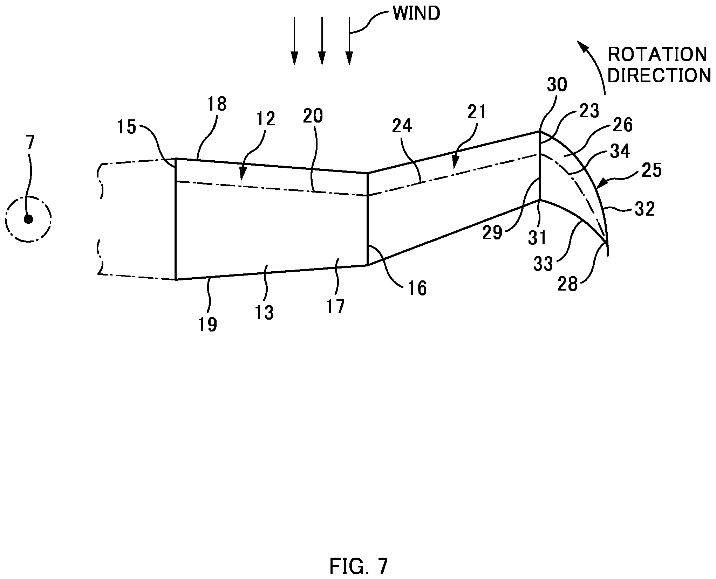

Fig. 7 illustrates a wind power generator 1 according to another embodiment of the present invention. The wind power generator 1 according to this embodiment is configured such that a forward-swept blade part 21, which has one end 22 of a streamlined cross-sectional shape of the same size and shape as that of a blade end 16 of a blade body 12 of a windmill blade 11, is integrally formed at the blade end 16 of the blade body 12, such that a reference line 24 is inclined at a predetermined angle forward in the rotation direction with respect to a reference line 20 of the blade body 12, and a winglet 25 having a configuration similar to that in the above embodiment is integrally attached to the other end 23 (blade end 23) of the forward-swept blade part 21. A configuration other than the above is similar to the configuration in the above embodiment.

Also, in the wind power generator 1 according to this embodiment, in addition to similar advantageous effects to those described in the above embodiment, the blade end vortexes generated at the blade end parts 17 can be further weakened, as compared to the blade end parts 17 of the blade body 12 without the forward-swept blade part 21, since an air flow in a direction from the blade end 23 (coupled part to the winglet 25) toward the blade root (coupled part to the blade body 12) of the forward-swept blade part 21 (inward spanwise flow phenomenon) can be generated. Thus, the power loss and aerodynamic noise caused by blade end vortexes can be greatly reduced.

### [Reference Signs List]

- 1: wind power generator
- 2: windmill
- 3: tower
- 4: nacelle
- 5: generator
- 6: ancillary equipment
- 7: rotary shaft
- 8: rotor hub
- 9: support shaft
- 10: cover
- 11: windmill blade
- 12: blade body
- 13: upper surface (suction surface)
- 14: lower surface (pressure surface)
- 15: one end (blade root)
- 16: other end (blade end)
- 17: blade end part
- 18: leading edge
- 19: trailing edge
- 20: reference line
- 21: forward-swept blade part
- 22: one end
- 23: other end (blade end)
- 24: reference line
- 25: winglet
- 26: upper surface (suction surface)
- 27: lower surface (pressure surface)
- 28: tip
- 29: base end
- 30: leading edge
- 31: trailing edge
- 32: front line
- 33: rear line
- 34: reference line
- a: blade chord length (blade chord line)
- b: blade thickness
- θ: turned up angle

## Claims

1. A windmill blade to be employed in a horizontal axis lift-type windmill, the windmill blade comprising:
a blade body having a streamlined cross-sectional shape, the blade body having a blade chord length that gradually decreases from a blade root toward a blade end; and
a winglet having a shape including a pointed tip, the winglet being integrally provided to the blade end of the blade body,
the winglet being configured in a shape such that the tip is positioned further rearward in a rotation direction than a trailing edge of the blade end of the blade body and further outward in a blade length direction than the blade body.

2. The windmill blade of claim 1, wherein
the winglet is integrally provided to the blade end of the blade body such that upper and lower surfaces of the winglet are turned up at a predetermined angle with respect to upper and lower surfaces of the blade body.

3. The windmill blade of claim 2, wherein
the turned up angle of the winglet is from 30 to 90°.

4. The windmill blade of any one of claims 1 to 3, wherein
the winglet is formed in a substantially sickle shape in plan view including a pointed tip.

5. The windmill blade of any one of claims 1 to 3, wherein
the winglet is formed in a substantially triangular shape in plan view including a pointed tip.

6. The windmill blade of any one of claims 1 to 5, wherein
a base end of the winglet has a streamlined cross-sectional shape of the same size and shape as size and shape of the blade end of the blade body, and the base end of the winglet is integrally attached to the blade end of the blade body.

7. A wind power generator comprising:
a wind mill comprising the wind turbine blade according to any one of claims 1 to 6, the wind turbine blade comprising a plurality of windmill blades; and
a generator configured to convert rotational energy of the windmill into electrical energy.
